# EUROPÄISCHE PATENTSCHRIFT

(11) **EP 1 905 705 B1**
(45) Veröffentlichungstag und Bekanntmachung des Hinweises auf die Patenterteilung: **06.10.2010**
(21) Anmeldenummer: 07113693.1
(22) Anmeldetag: 02.08.2007
(51) Int. Cl.: B65G 1/04, B65G 63/02, B64F 1/32

(54) **Cargobereich einer Flughafenanlage**
Cargo area in an airport facility
Zone de chargement d'une zone aéroportuaire

(30) Priorität: 29.09.2006 DE 102006046691
(43) Veröffentlichungstag der Anmeldung: 02.04.2008
(73) Patentinhaber: SIEMENS AKTIENGESELLSCHAFT, 80333 München (DE)
(72) Erfinder: Wenzel, Reinhard, 40699 Erkrath (DE)

(56) Entgegenhaltungen:
- EP-A- 1 331 179
- DE-A1- 10 150 915
- DE-U1- 29 724 039
- US-A- 3 727 581

## Beschreibung

Die Erfindung betrifft den Cargobereich einer Flughafenanlage mit einer Landside zum Anschluss an die Straße und/oder Schiene und einer Airside zum Anschluß an das Vorfeld des Flughafens, sowie beide Seiten verbindende Transportbahnen für die zwischen Landside und Airside zu transportierenden standardisierten Ladeeinheiten (ULD) und Zwischenlagern zum Zwischenpuffern der Ladeeinheiten innerhalb des Cargobereiches vor dem Zusammenstellen der einem Flugzeug oder einem Fahrzeug in gewünschter Reihenfolge zuzuordnenden Ladung.

Ein derartiger Cargobereich ist bereits aus US-A-3727581 bekannt.

In Cargobereichen von Flughäfen werden Waren in so genannten ULDs, wie die genormten Transportbehältern genannt werden, umgeschlagen, die vorteilhafterweise in ihrer räumlichen Ausgestaltung dem Profil des Flugzeugrumpfes angepasst sind. Gewöhnlich werden die Waren auf der Landside, über Eingangsportale angeliefert, an denen LKW's oder Eisenbahnwaggons andocken. Die Waren werden dann in den ULDs über Bypassstrecken (Förderbahnen) auf die andere Seite des Cargobereichs transportiert, wo sie auf der Airside in Vorfeldnähe des Flughafens bereitgestellt werden. Das gleiche gilt ebenfalls in umgekehrter Richtung, wenn ULDs mit Fracht per Flugzeug eintreffen und auf die entsprechenden LKWs oder Waggons zum Weitertransport verteilt werden müssen. In herkömmlichen Cargobereichen der Flughäfen ist eine gleichzeitige Nutzung der Transportbahnen für die ULD's in beiden Richtungen in Folge der meist einfach ausgelegten Bypassstrecke nicht möglich.

Obgleich vielfach die Waren entsprechend ihrer Verladezeiten (just-in-time) angeliefert werden, gelingt es häufig nicht die Anlieferung und den Weitertransport zu synchronisieren. Gründe hierfür sind z.B., dass sich das Flugzeug verspätet hat oder die Bereitstellungsstrecken bereits durch andere zusammengestellte Aufträge belegt sind. In einem solchen Fall muss der überwiegende Teil der ULDs vor dem Verladen in das Fahrzeug oder Flugzeug in ein ULD-Lager eingelagert und dort zwischengespeichert werden. In der Realität müssen deshalb auch ULDs, die wissentlich in kürzester Zeit benötigt werden, trotzdem aufwendig mit Hilfe von Elevating Transfer Vehicles (ETV's) bzw. Einschienengeräten in das ULD-Hauptlager eingelagert werden. Diese Vorgehensweise ist zwingend, um die Transportbahnen, auf denen zwar eine Pufferung, aber keine Sortierung möglich ist, für nachkommende Cargosendungen freizuhalten.

Ausgehend von den beschriebenen Nachteilen derzeitiger Cargobereiche ist es Aufgabe der vorliegenden Erfindung, in unmittelbarer Nähe der Transportbahnen Speicher- und Sortiermöglichkeiten unter gleichzeitiger Entkopplung vom Hauptlager zu schaffen, um eine flexible Bereitstellung zu erreichen.

Zur Lösung der Aufgabe wird erfindungsgemäß vorgeschlagen, dass den zwischen Landside und Airside in beiden Richtungen verwendbaren Transportbahnen vom Förderfluss der Ladeeinheiten entkoppelbare Vertikalspeicher mit jeweils einer Mehrzahl von übereinander angeordneten Lagerebenen unmittelbar zugeordnet sind, die über oder neben den Transportbahnen aufgestellt sind und in die mit Hilfe von Hebern die von den Transportbahnen abhebbaren Ladungsträger einlagerbar sind. Die den Transportbahnen zugeordneten Vertikalspeicher vermeiden die aufwändige Einlagerung im Hauptlager und ermöglichen den sehr schnellen Zugriff auf die dort zwischengepufferten Ladungsträger bei gleichzeitiger Sortiermöglichkeit.

Als besonders günstig wird angesehen, wenn nach der Erfindung die Vertikalspeicher vom Förderfluss der Ladeeinheiten entkoppelbar sind. Diese Entkopplung ermöglicht nämlich die Transportbahnen von jeglichen zu speichernden Ladeeinheiten freizuhalten, so dass nachfolgende und vorzuziehende Aufträge an den gepufferten Ladeeinheiten vorbeitransportiert werden können und dass sogar Transportbahnen in beidseitigen Richtungen verwendet werden können.

In einer günstigen Ausgestaltung der Erfindung wird vorgeschlagen, dass die Transportbahnen quer oder längs durch die Vertikalspeicher hindurchgeführt sind. Die Vertikalspeicher mit ihren übereinander angeordneten Lagerebenen würden dadurch die Transportbahn überspannen, wobei die unterste Ebene zum Durchfahren der Ladeeinheiten freigehalten bleibt. Die Nähe des Vertikalspeichers zu der Transportbahn ermöglicht die Ein- und Auslagerung in kürzester Zeit; sobald eine Ladeeinheit eingelagert ist, ist die Transportbahn für den Transport weiterer Ladeeinheiten frei.

Erfindungsgemäß untergreifen die Heber die auf den Transportbahnen aufliegenden Ladeeinheiten. Die Heber sind beispielsweise als Lift ausgeführt und transportieren das Ladegut von der Transportbahn in die entsprechende Lagerebene und geben sie dort zur vorübergehenden Einlagerung ab.

Besonders günstig ist es, wenn die Lagerebenen eines Vertikalspeichers beidseitig des zentral in dem Vertikalspeicher angeordneten Hebers vorgesehen sind und dem Heber Mittel zum Übergeben und Übernehmen der Ladeeinheiten in die und aus den beidseitigen Lagerebenen des Vertikalspeichers zugeordnet sind. Die Einlagerung und Auslagerung kann also in beiden Richtungen des Hebers erfolgen, wodurch mit einem und demselben Heber eine große Lagerkapazität erreichbar ist.

Es ist günstig, wenn die beidseitig eines Hebers angeordneten Regalebenen zur Aufnahme unterschiedlich großer Ladungsträger unterschiedlich dimensioniert sind, wobei der Heber entsprechend dem größten ein- und auszulagernden Ladungsträger dimensioniert ist. So kann beispielsweise eine Seite des Vertikalspeichers für 15 ft und die andere Lagerseite für 10 ft. Ladungsträger ausgebildet sein, während der Heber als 15 ft Standardgerät ausgeführt ist. Auch eine doppelt tiefe Einlagerung, beispielsweise von zwei oder drei 5 ft Ladungsträgern in einer entsprechend großen Lagerebene ist möglich.

Nach einem weiteren günstigen Merkmal der Erfindung ist vorgesehen, dass die Vertikalspeicher seitlich neben der Transportbahn aufgestellt sind und jeweils eine in der Ebene der Transportbahn verlaufende Quertransportbahn mindestens in den Vertikalspeicher in den Bereich des Hebers hineinreicht. In diesem Fall passiert die Transportbahn die seitlich davon aufgestellten Vertikalspeicher. Soll ein Ladungsträger in den Speicher eingelagert werden, so wird dieser quer und seitlich aus der Transportbahn auf die Quertransportbahn ausgeschleust, die den Ladungsträger in die untere Ebene des Vertikalspeichers transportiert. Dort übernimmt der Heber den einzulagernden Ladungsträger, liftet ihn auf die entsprechende Lagerebene und lagert ihn dort zur Zwischenpufferung ein. Dieser Vorgang des seitlichen Ausschleusens kann nach beiden Seiten der Transportbahn erfolgen, wenn die Vertikalspeicher beidseitig der Transportbahn aufgestellt sind.

Wenn nach einem anderen Merkmal der Erfindung die Quertransportbahn den Vertikalspeicher in der untersten Ebene durchdringt und auf der der Transportbahn abgewandten Seite eine Ankopplung für Fahrzeuge oder ein Weitertransport der Ladeeinheit zu einer weiteren Station ermöglicht wird, so können nicht einzulagernde aber auszuschleusende Ladungsträger durch den Vertikalspeicher hindurchtransportiert und beispielsweise einem LKW übergeben werden. Es ist auch denkbar, eingelagerte aber nicht in die Transportbahn zurückzuführende Ladungsträger dort auszuschleusen. Natürlich ist es auch denkbar, die Quertransportbahn zu verlängern und Ladungsträger von dort aus einem anderen Bestimmungsort zuzuführen.

In einer Variante der Erfindung wird vorgeschlagen, einen Vertikalspeicher zwischen zwei Transportbahnen aufzustellen und von beiden Transportbahnen über Quertransportbahnen zu beschicken. Diese Lösung arbeitet mit zwei parallelen Transportbahnen, von denen beispielsweise eine für den Hin- und eine für den Rücktransport reserviert sein kann, während der Zwischenspeicher für beide Transportrichtungen genutzt werden kann.

In einer weiteren günstigen Ausgestaltung der Erfindung ist vorgesehen, dass die übereinander angeordneten Lagerebenen an mindestens drei Seiten des Hebers vorgesehen sind, wobei die unterste Lagerebene mindestens an einer Seite des Vertikalspeichers frei bleibt. Der Heber als zentrales Element des Vertikalspeichers kann aufgenommene Ladeeinheiten nach den beiden gegenüberliegenden Seiten entladen und von diesen Seiten aufnehmen, aber auch quer dazu zu einer dritten Seite des Hebers verschieben oder von dort aufnehmen, wenn die Beladung oder Entladung auf der untersten Lagerebene erfolgt.

Mit der Erfindung wird es sogar möglich, dass bei zwischen zwei Transportbahnen aufgestelltem Vertikalspeicher eine drei- bis vierseitige Einlagerung in x- und z-Richtung in die Lagerebenen ermöglicht wird, wobei die quer zur Transportrichtung erfolgende Einlagerung in Lagerebenen erfolgt, die oberhalb der Transportbahnen in der jeweils zweiten bis n-ten Ebene angeordnet sind. Die Ein- und Auslagerung der Ladeeinheiten erfolgt dann kreuzförmig in den einzelnen horizontalen Ebenen, wobei in der untersten Ebene die Einlagerung der Ladeeinheiten auf den Heber erfolgt.

Der Heber kann recht einfach gestaltet, beispielsweise als Rollendeck ausgebildet sein. Die erfindungsgemäßen Zwischenspeicher sind günstigerweise als Zwischenpuffer im vorfeldnahen und/oder im straßen/schienennahen Cargobereich angeordnet und werden so befüllt, dass eine Sortierung der Ladeeinheiten nahe des Bereiches stattfindet, wo die Ladeeinheiten zum Versand abgeholt werden.

Wenn in der Nähe des Vorfeldes, wo der Platz zur Bereitstellung der Fracht ohnehin sehr begrenzt ist, ein Vertikalspeicher der erfindungsgemäßen Art aufgestellt wird, können kurzfristig die zur Abfertigung eines Cargoflugzeuges notwendigen Ladeeinheiten verfügbar gemacht werden, ohne die ETV's bzw. Einschienengeräte unnötig zu binden.

Insgesamt ist die Erfindung vorteilhaft, weil sie den Ein- und Auslagerungsprozess beschleunigt und flexibel gestaltet, weil die Ladeeinheiten nicht mehr auf den Transportbahnen zwischengespeichert werden müssen, wo sie andere Ladeeinheiten blockieren, sondern in der Nähe des Abrufortes gepuffert werden können und sogar in der richtigen anderen Reihenfolge wieder aufgenommen werden können.

Ein Ausführungsbeispiel der Erfindung ist in der Zeichnung dargestellt und wird nachfolgend beschrieben.

Es zeigt:
- Figur 1: die schematische Darstellung eines erfindungsgemäßen Cargobereichs eines Flughafens in der Draufsicht,
- Figur 2: eine zweite Variante des erfindungsgemäßen Cargobereiches,
- Figur 3: einen Vertikalspeicher nach der Erfindung in 3D-Darstellung,
- Figur 4: eine Variante eines erfindungsgemäßen Vertikalspeichers und
- Figur 5: einen Vertikalspeicher zwischen zwei Transportbahnen.

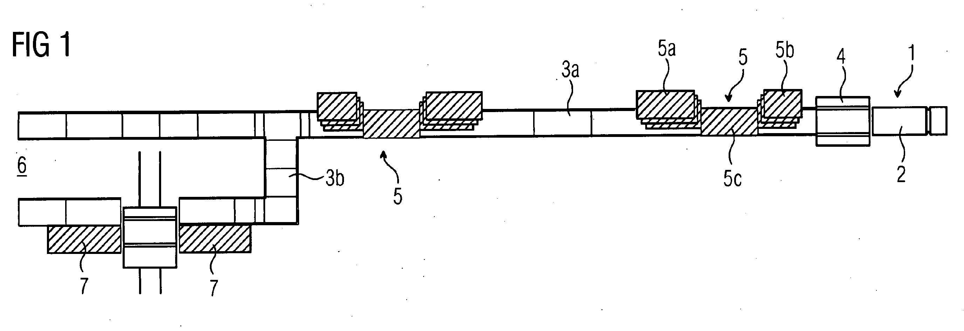

In Figur 1 ist mit 1 in der grobschematischen Darstellung die Landside einer Flughafenanlage bezeichnet, wo Lastfahrzeuge 2 ihre Ladung zum Weitertransport auf einer Transportbahn 3a, beispielsweise einer Rollenbahn, abliefern. Unmittelbar im Entladebereich des LKW's ist eine Einrichtung zum Wiegen und Vermessen der Ladeeinheit vorgesehen, bei der es sich in der Regel um so genannte ULDs, standardisierte Behälter zur Aufnahme des zu transportierenden Gutes handelt. Die Messvorrichtung ist mit 4 bezeichnet. Unmittelbar im Anschluss an die Messvorrichtung 4 ist in Figur 1 erkennbar ein erster Vertikalspeicher 5 vorgesehen, dessen unterste Ebene von der Transportbahn 3a durchlaufen wird. Dieser erste Vertikalspeicher 5 dient vorzugsweise der Speicherung von Lagereinheiten, die, von der Airside kommend, zur Auslagerung auf der Landside vorgesehen sind, die also bereits in der Nähe des LKW Ladebereiches gepuffert werden, um kurzzeitig verladen werden können. Der Vertikalspeicher besteht aus mehreren übereinander angeordneten Lagerebenen 5a, 5b, die beidseitig eines Hebers 5c angeordnet sind. Der Heber 5c übernimmt die Ladeeinheit von der Transportbahn 3a und hebt diese vertikal in Flucht zu einer von mehreren übereinander angeordneten Lagerebenen 5a, 5b und lagert die Ladeeinheit dort ein.

Ein zweiter Vertikalspeicher 5 ist im weiteren Verlauf der Transportbahn 3a in der Nähe der Airside vorgesehen, auch er dient dem Zwischenspeichern oder Puffern von Ladeeinheiten in der Nähe des Ortes, wo sie benötigt werden. Dementsprechend werden dort vorzugsweise Ladeeinheiten gepuffert, die, von der Landside kommend, zeitnah in das Flugzeug verladen werden sollen. Das Hauptlager 7 wird dadurch entlastet, die Zugriffszeiten werden verkürzt.

Durch das Einlagern der Ladeeinheiten in die verschiedenen Lagerebenen kann beim Auslagern die zum Einlagern gewählte Reihenfolge geändert werden, so dass ein Sortieren der eingelagerten Ladeeinheiten möglich ist. Nach dem Auslagern werden die Ladeeinheiten in der Ebene der Förderbahn abgesetzt und über letztere unmittelbar zu den Verladeorten auf der Airside 6 verbracht.

Die in Figur 1 dargestellte Anordnung der Vertikalspeicher im Verlauf der Transportbahnen ermöglicht ein sehr flexibles Arbeiten, weil dadurch, dass die Ladeinheiten von den Transportbahnen 3a entfernt und in die Zwischenspeicher verbracht werden können, die Transportbahnen nicht nur frei sind für nachfolgende Ladeeinheiten, sondern auch in beiden Richtung verwendet werden können.

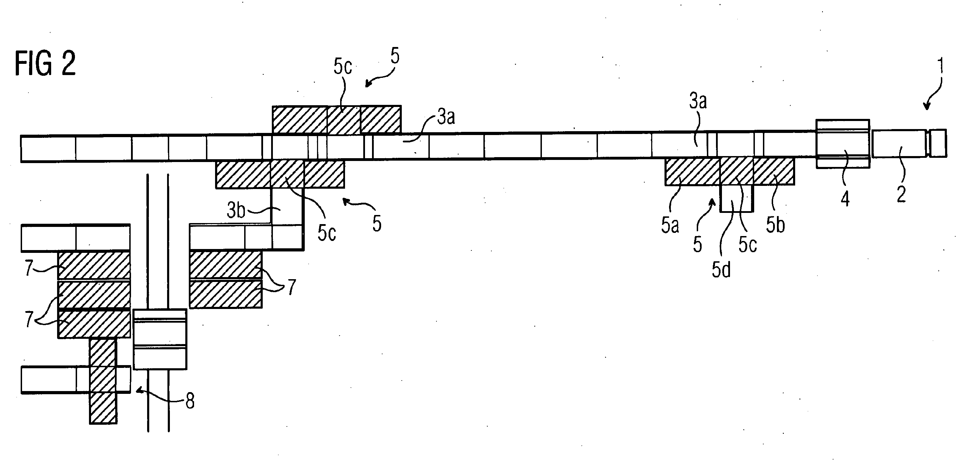

Eine andere Variante eines Cargobereichs einer Flughafenanlage ist in Figur 2 ebenfalls schematisch in der Draufsicht dargestellt. Die von dem LKW 2 abgeladenen Ladeeinheiten werden zunächst bei 4 vermessen und gewogen und gelangen dann auf die Förderbahn 3a. Auch in diesem Beispiel ist nahe der Landside neben der Förderbahn 3a ein erfindungsgemäßer Vertikalspeicher 5 vorgesehen, der gleichfalls aus übereinander angeordneten Lagerebenen 5a, 5b beidseitig des Hebers 5c besteht und der Bereitstellung der von der Airside kommenden, zeitnah in den LKW zu verladenden Ladeeinheiten dient. Wie erkennbar, ist, wie auch in Figur 1 dargestellt, die mit den Lagerebenen 5a bestückte Seite des Vertikalspeichers 5 für die Einlagerung größerer Behälter (z.B. 15ft) vorgesehen, während die Seite mit den Lagerebenen 5b für kleinere Behälter (z.B. 10ft) ausgestaltet ist. Auch hier ist eine mehrfachtiefe Einlagerung denkbar und möglich. Die von dem LKW 2 über die Transportbahn 3a herantransportierte Ladeeinheit kann durch Querverschiebung in den vorfeldseitigen Vertikalspeicher 5 überführt werden, wo sie von dem Heber 5c in die jeweilige Lagerebene zur vorübergehenden Einlagerung nahe der Airside gehoben wird.

Wie auf der linken Hälfte der Zeichnungsfigur 2 erkennbar, sind die Vertikalspeicher 5 beidseitig der Transportbahn 3a angeordnet, um die Lagerkapazität zusätzlich zu erhöhen. Dabei ragt jeweils ein kurzer Querförderer in den Bereich des Hebers der Vertikalspeicher hinein, wie an dem (in der Zeichnung) oberen Vertikalspeicher erkennbar ist oder aber eine Querförderbahn 3b durchdringt den Vertikalspeicher 5 und ermöglicht eine Anbindung an das Hauptlager 7. Dadurch können zeitnah auszulagernde Ladeeinheiten bereits aus dem Hauptlager 7 herausgeholt und, über die Quertransportbahn 3b zugeführt, in dem (in der Zeichnung) unteren Zwischenspeicher bereitgestellt werden. Bei Abruf können diese Ladeeinheiten auf die Transportbahn 3a abgegeben und unmittelbar und sehr kurzfristig zur Airside (in der Zeichnung nach links) transportiert werden.

Es ist, wie bei 8 dargestellt auch möglich, einen Vertikalspeicher der vorgenannten Bauart unmittelbar auf dem oder in der Nähe des Vorfeldes aufzustellen, um diesen ebenfalls zur Zwischenspeicherung zu verwenden. Insgesamt ergibt sich dadurch einerseits eine hohe Lagerkapazität im Vorfeldbereich und andererseits wird eine Entkopplung des Transferfahrzeuges von der Abholung der Ladeeinheiten ermöglicht.

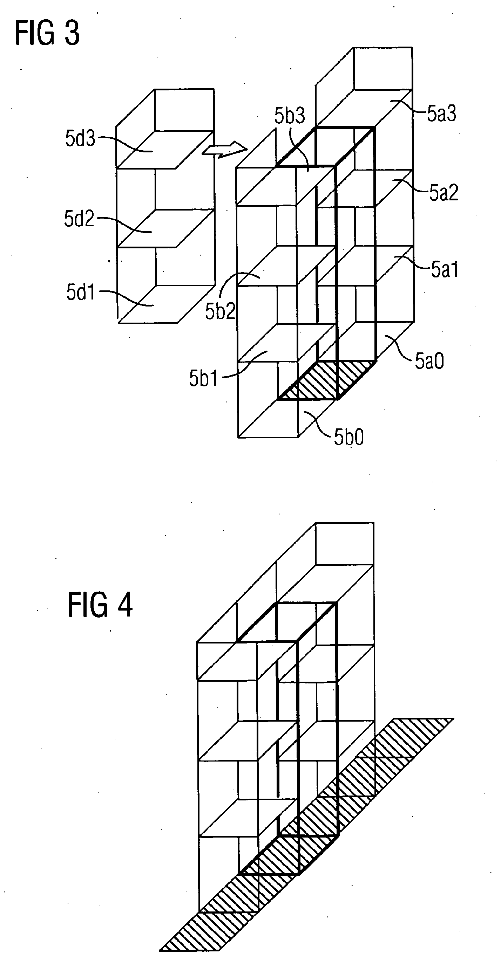

In Figur 3 ist in schematischer, 3-dimensionaler Darstellung ein Vertikalspeicher der Erfindung dargestellt, der hier aus vier Lagerebenen auf zwei Seiten des Hebers besteht. Die Lagerebenen sind mit 5a0 - 5a3 bzw. 5b0 - 5b3 bezeichnet; sie sind beidseitig des Hebers 5c angeordnet. Der Heber 5c ist in der Lagerebene 5a0 angeordnet; die Ladeeinheit kann seitlich in den Vertikalspeicher eingeschoben werden, um in die jeweiligen Lagerebenen 5a oder 5b angehoben werden zu können.

Wie in Figur 3 auf der linken Seite zu erkennen ist, kann die Lagerkapazität des Vertikalspeichers 5 dadurch erhöht werden, dass zusätzliche Ladeebenen an der (gezeichneten) Rückseite des Vertikalspeichers 5 angesetzt werden. In diesem Fall ist vorgesehen, die unterste Ladeebene 5d0 freizuhalten, um ein Herausfahren der Ladeeinheit nach der Rückseite des Vertikalspeichers zu ermöglichen. Die zusätzlich geschaffenen Lagerebenen sind mit 5d1, 5d2 und 5d3 bezeichnet. Sie werden an den Vertikalspeicher 5 in Pfeilrichtung angesetzt und dort befestigt.

Figur 4 zeigt eine Variante des Vertikalspeichers 5, bei der die Förderbahn 3a den Vertikalspeicher 5 komplett in der unteren Ebene durchfährt. Bei dieser günstigen Lösung können die in den Vertikalspeicher hineintransportierten Ladeeinheiten direkt vom Heber aufgenommen und nach oben in die jeweilige Ladeebene transportiert werden. Vorteile sind schnelle Zugriffszeiten und kurze Transportwege.

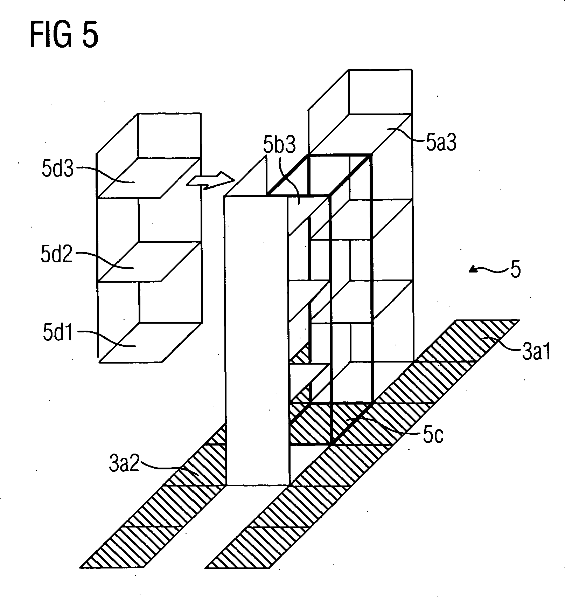

In Figur 5 schließlich ist eine Ausgestaltung der Erfindung dargestellt, bei der ein Vertikalspeicher zwischen zwei Transportbahnen 3a1 und 3a2 angeordnet ist. Durch Quertransport einer Ladeeinheit von einer der Transportbahnen 3a1 oder 3a2 wird ein Ladungsträger auf den Heber 5c überführt und von diesem in die jeweilige Lagerebene gehoben und dort eingelagert. Wie anhand von Figur 3 beschrieben, kann auch hier die Lagerkapazität dadurch geschaffen werden, dass zusätzliche Lagerebenen seitlich an den Vertikalspeicher angesetzt werden, so dass eine Ein- und Auslagerung der Ladeeinheiten in drei Richtungen erfolgen kann. Natürlich ist es auch möglich, die vierte Seite des Vertikalspeichers 5 ebenfalls mit zusätzlichen Ladeebenen zu bestücken, Voraussetzung ist lediglich, dass die unterste Ebene des Vertikalspeichers zum Ein- und Auslagern der Ladeeinheiten frei bleibt.

Die vorliegende Erfindung ist sehr flexibel, sie ermöglicht das Zwischenlagern von Ladeeinheiten und eine sehr flexible Bereitstellung unter gleichzeitiger Entkopplung vom und Entlastung des Hauptlager, in das bisher die Ladeeinheiten, selbst wenn sie kurzfristig gebraucht worden sind, eingelagert werden mussten. Das Einlagern der Ladeeinheiten in die Zwischenspeicher gibt die Transportbahn für andere Ladeeinheiten frei und ermöglicht die unmittelbare Verbindung von Landside und Airside in beiden Richtungen. Die Kapazitäten der Vertikalspeicher sind variabel und abhängig von der Größe und der Anzahl der Lagerebenen. In beiden Anordnungen, sowohl über der Transportbahn sowie auch unmittelbar neben der Transportbahn werden die Auslagerungswege sehr kurz gehalten, so dass ein schneller Zugriff auf die Ladeeinheiten möglich ist. Das insbesondere dann, wenn Vertikalspeicher in der Nähe der Landside, also dort wo die LKW's beladen werden, für die in den LKW zu ladenden Ladeeinheiten vorgesehen sind oder wenn die Vertikalspeicher in der Nähe des Vorfeldes vorgesehen sind, wo das Lagergut zur Beladung des Flugzeuges bereit gehalten werden soll.

## Patentansprüche

1. Cargobereich einer Flughafenanlage mit einer Landside (1) zum Anschluss an die Straße und/oder Schiene und einer Airside (2) zum Anschluss an das Vorfeld des Flughafens,
sowie beide Seiten verbindende Transportbahnen (3a, 3a1, 3a2) für die zwischen Landside und Airside zu transportierende standardisierten Ladeeinheiten (ULDs) und Zwischenlagern zum Zwischenpuffern der Ladeeinheiten innerhalb des Cargobereiches vor dem Zusammenstellen der einem Flugzeug oder einem Fahrzeug gewünschter Reihenfolge zuzuordnenden Ladung,
**dadurch gekennzeichnet, dass**
den zwischen Landside und Airside in beiden Richtungen verwendbaren Transportbahnen (3a) vom Förderfluss der Ladeeinheiten entkoppelbare Vertikalspeicher (5) mit jeweils einer Mehrzahl von übereinander angeordneten Lagerebenen (5a,5b) zugeordnet sind, die über oder neben den Transportbahnen (3a, 3a1, 3a2) aufgestellt sind und in die mit Hilfe von Hebern (5c) die von den Transportbahnen (3a, 3a1, 3a2) abhebbaren Ladeeinheiten einlagerbar sind.

2. Cargobereich nach Anspruch 1,
**dadurch gekennzeichnet, dass**
die Transportbahnen (3a) quer oder längs durch die Vertikalspeicher (5) hindurchgeführt sind.

3. Cargobereich nach Anspruch 1,
**dadurch gekennzeichnet, dass**
die Heber (5c) die auf den Transportbahnen (3a) aufliegenden Ladeeinheiten untergreifen.

4. Cargobereich nach einem der Ansprüche 1 bis 3,
**dadurch gekennzeichnet, dass**
die Lagerebenen (5a,5b) eines Vertikal speichers (5) beidseitig des zentral in dem Vertikalspeicher (5) angeordneten Hebers (5c) vorgesehen sind und dem Heber (5c) Mittel zum Übergeben und Übernehmen der Ladeeinheiten in die und aus den beidseitigen Lagerebenen (5a,5b) des Vertikalspeicher (5) zugeordnet sind.

5. Cargobereich nach Anspruch 4,
**dadurch gekennzeichnet, dass**
die beidseitig eines Hebers (5c) angeordneten Lagerebenen (5a, 5b) zur wahlweisen Aufnahme unterschiedlich großer Ladeeinheiten oder mehrerer kleiner Ladeeinheiten unterschiedlich dimensioniert sind, wobei der Heber (5c) entsprechend der größten ein- und auszulagernden Ladeeinheit dimensioniert ist.

6. Cargobereich nach Anspruch 1,
**dadurch gekennzeichnet, dass**
die Vertikalspeicher (5) seitlich neben der Transportbahn (3a) aufgestellt sind und jeweils eine in der Ebene der Transportbahn (3a) verlaufende Quertransportbahn (3b) mindestens in den Vertikalspeicher (5) in den Bereich des Hebers (5c) hineinreicht.

7. Cargobereich nach Anspruch 6,
**dadurch gekennzeichnet, dass**
die Quertransportbahn (3b) mindestens einen der Vertikalspeicher (5) in der untersten Ebene durchdringt und auf der der Transportbahn (3a) abgewandten Seite eine Ankopplung für Fahrzeuge (2) oder einen Weitertransport der Ladeeinheiten zu einer weiteren Station ermöglicht.

8. Cargobereich nach einem der Ansprüche 1 bis 7,
**dadurch gekennzeichnet, dass**
die Vertikalspeicher (5) beidseitig neben der Transportbahn (3a) aufgestellt sind.

9. Cargobereich nach Anspruch 1,
**dadurch gekennzeichnet, dass**
ein Vertikalspeicher (5) zwischen zwei Transportbahnen (3a1,3a2) aufgestellt ist und von beiden Transportbahnen (3a1,3a2) über Quertransportbahnen (3b) beschickbar ist.

10. Cargobereich nach einem der Ansprüche 1 bis 9,
**dadurch gekennzeichnet, dass**
die übereinander angeordneten Lagerebenen (5aⁿ bzw. 5bⁿ) an mindestens drei Seiten des Hebers (5c) vorgesehen sind, wobei die unterste Lagereben (5a0 bzw.5b0) mindestens an einer Seite des Vertikalspeichers (5) frei bleibt.

11. Cargobereich nach Anspruch 9,
**dadurch gekennzeichnet, dass**
bei zwischen zwei Transportbahnen (3a1,3a2 ) aufgestelltem Vertikalspeicher (5) eine drei- bis vierseitige Einlagerung in x- und z- Richtung in die Lagerebenen (5a,5b) ermöglicht wird, wobei die quer zur Transportbahnrichtung erfolgende Einlagerung in Lagerebenen erfolgt, die oberhalb der Transportbahnen (3a1,3a2) in der jeweils zweiten bis n-ten Ebene angeordnet sind.

12. Cargobereich nach einem der Ansprüche 1 bis 11,
**dadurch gekennzeichnet, dass**
die Heber (5c) als Rollendeck ausgebildet sind.

13. Cargobereich nach einem der Ansprüche 1 bis 12,
**dadurch gekennzeichnet, dass**
die Vertikalspeicher (5) als Zwischenpuffer im vorfeldnahen und/oder im straßen/schienennahen Cargobereich (1 bzw. 6) angeordnet sind.

## Claims

1. Cargo area of an airport, having a land side (1) for connecting to the road and/or railroad and having an air side (2) for connecting to the apron of the airport, and having transporting paths (3a, 3a1, 3a2) which connect the two sides and are intended for the standard loading units (ULDs) which are to be transported between the land side and air side, and also having interim stores for the buffer storage of the loading units within the cargo area prior to the cargo which is to be assigned to an aircraft or a vehicle in a desired order being assembled, **characterized in that** the transporting paths (3a) which can be used in both directions between the land side and air side, are assigned vertical stores (5) which can be isolated from the conveying flow of the loading units and each have a plurality of storage levels (5a, 5b) which are arranged one above the other, are set up above or alongside the transporting paths (3a, 3a1, 3a2) and in which, with the aid of lifting means (5c), the loading units, which can be lifted off from the transporting paths (3a, 3a1, 3a2), can be stored.

2. Cargo area according to Claim 1, **characterized in that** the transporting paths (3a) are guided transversely or longitudinally through the vertical stores (5).

3. Cargo area according to Claim 1, **characterized in that** the lifting means (5c) engage beneath the loading units resting on the transporting paths (3a).

4. Cargo area according to one of Claims 1 to 3, **characterized in that** the storage levels (5a, 5b) of a vertical store (5) are provided on both sides of the lifting means (5c), which is arranged centrally in the vertical store (5), and the lifting means (5c) is assigned means for transferring the loading units into, and receiving the loading units from, the storage levels (5a, 5b) on both sides of the vertical store (5).

5. Cargo area according to Claim 4, **characterized in that** the storage levels (5a, 5b), which are arranged on both sides of a lifting means (5c), are dimensioned differently for optionally receiving loading units of different sizes or a plurality of small loading units, the lifting means (5c) being dimensioned to correspond to the largest loading unit for storage and retrieval.

6. Cargo area according to Claim 1, **characterized in that** the vertical stores (5) are set up laterally alongside the transporting path (3a) and in each case one transverse transporting path (3b), which runs in the plane of the transporting path (3a), extends at least into the vertical store (5), into the region of the lifting means (5c).

7. Cargo area according to Claim 6, **characterized in that** the transverse transporting path (3b) passes through at least one of the vertical stores (5) at the lowermost level and, on the side which is directed away from the transporting path (3a), allows coupling for vehicles (2) or further transportation of the loading units to a further station.

8. Cargo area according to one of Claims 1 to 7, **characterized in that** the vertical stores (5) are set up alongside the transporting path (3a) on both sides.

9. Cargo area according to Claim 1, **characterized in that** a vertical store (5) is set up between two transporting paths (3a1, 3a2) and can be charged from both transporting paths (3a1, 3a2), via transverse transporting paths (3b).

10. Cargo area according to one of Claims 1 to 9, **characterized in that** the storage levels (5aⁿ and 5bⁿ), which are arranged one above the other, are provided on at least three sides of the lifting means (5c), the lowermost storage level (5a0 or 5b0) at least on one side of the vertical store (5) remaining free.

11. Cargo area according to Claim 9, **characterized in that** setting up a vertical store (5) between two transporting paths (3a1, 3a2) allows introduction into the storage levels (5a, 5b), in the x and z directions, on three to four sides, in which case the introduction, which takes place transversely to the transporting-path direction, takes place on storage levels which are arranged on the respectively second to nth level above the transporting paths (3a1, 3a2).

12. Cargo area according to one of Claims 1 to 11, **characterized in that** the lifting means (5c) are designed as roller decks.

13. Cargo area according to one of Claims 1 to 12, **characterized in that** the vertical stores (5) are arranged as interim stores in the cargo area (1 or 6) in the vicinity of the apron and/or in the vicinity of the road/railroad.

## Revendications

1. Zone de fret d'une installation aéroportuaire comprenant un côté ( 1 ) terre pour le raccordement au trafic routier et/ou ferroviaire et un côté ( 2 ) air pour le raccordement à l'aire de trafic de l'installation aéroportuaire,
ainsi que des voies ( 3a, 3a1, 3a2 ) de transport reliant les deux côtés pour des unités ( ULDs ) de chargement normalisées à transporter entre le côté terre et le côté air et des stockages intermédiaires pour le stockage intermédiaire des unités de chargement dans la zone de chargement avant le rassemblement de la charge étant à associer à un avion ou à un véhicule dans un ordre souhaité,
**caractérisée en ce qu'**aux voies ( 3a ) de transport pouvant être utilisées dans les deux sens entre le côté terre et le côté air sont associés des accumulateurs ( 5 ) verticaux, pouvant être découplés du flux de convoyage des unités de chargement et ayant respectivement une multiplicité de plans ( 5a, 5b ) de stockage superposés, qui sont mis sur ou à côté des voies ( 3a, 3a1, 3a2 ) de transport et dans lesquels les unités ( 3a, 3a1, 3a2 ) de chargement, pouvant être soulevées des voies ( 3a ) de transport, peuvent être mises à l'aide d'éléments de levage ( 5c ).

2. Zone de fret suivant la revendication 1,
**caractérisée en ce que**
les voies ( 3a ) de transport traversent transversalement ou longitudinalement les accumulateurs ( 5 ) verticaux.

3. Zone de fret suivant la revendication 1,
**caractérisée en ce que**
les éléments de levage ( 5c ) s'accrochent sous les unités de chargement se trouvant sur les voies ( 3a ) de transport.

4. Zone de fret suivant l'une des revendications 1 à 3,
**caractérisée en ce que**
les plans ( 5a, 5b ) de stockage d'un accumulateur ( 5 ) vertical sont prévues de deux côtés de l'élément de levage ( 5c ) disposés centralement dans l'accumulateur ( 5 ) vertical et à l'élément de levage ( 5c ) sont associés des moyens de transbordement et de prise en charge des unités de chargement dans les plans ( 5a, 5b ) de stockage de l'accumulateur ( 5 ) vertical des deux côtés et hors de ceux-ci.

5. Zone de fret suivant la revendication 4,
**caractérisée en ce que**
les plans ( 5a, 5b ) de stockage disposés des deux côtés d'un dispositif de levage ( 5c ) ont, pour la réception au choix d'unités de chargement de grandeurs différentes ou de plusieurs unités de chargement plus petites, des dimensions différentes, l'élément de levage ( 5c ) étant dimensionné conformément à l'unité de chargement de la plus grande à entrer et à sortir.

6. Zone de fret suivant la revendication 1,
**caractérisée en ce que**
les accumulateurs ( 5 ) verticaux sont mis latéralement à côté de la voie ( 3a ) de transport et respectivement une voie ( 3b ) de transport transversal, s'étendant dans le plan de la voie ( 3a ) de transport, atteint au moins l'accumulateur ( 5 ) vertical dans la région de l'élément de levage ( 5c ).

7. Zone de fret suivant la revendication 6,
**caractérisée en ce que**
la voie ( 3b ) de transport transversal traverse au moins un accumulateur ( 5 ) vertical dans le plan le plus bas et rend possible, du côté éloigné de la voie ( 3a ) de transport, un accouplement pour des véhicules ( 2 ) ou un transport plus loin des unités de chargement vers un autre point.

8. Zone de fret suivant l'une des revendications 1 à 7,
**caractérisée en ce que** les accumulateurs ( 5 ) verticaux sont mis des deux côtés à côté de la voie ( 3a ) de transport.

9. Zone de fret suivant la revendication 1,
**caractérisée en ce qu'**un accumulateur ( 5 ) vertical est mis entre deux voies ( 3a1, 3a2 ) de transport et peut être alimenté par deux voies ( 3a1, 3a2 ) de transport par l'intermédiaire de voies ( 3b ) de transport transversales.

10. Zone de fret suivant l'une des revendications 1 à 9,
**caractérisée en ce que** les plans ( 5an ou 5bn ) de stockage superposés sont prévus sur au moins trois côtés de l'élément de levage ( 5c ), le plan ( 5a0 ou 5b0 ) de stockage le plus bas restant dégagé au moins d'un côté de l'accumulateur ( 5 ) vertical.

11. Zone de fret suivant la revendication 9,
**caractérisée en ce que**,
pour un accumulateur ( 5 ) vertical mis entre deux voies ( 3a1, 3a2 ) de transport, une entrée en stockage par trois côtés ou quatre côtés dans la direction x et dans la direction z est rendue possible dans les plans ( 5a, 5b ) de stockage, l'entrée en stockage, qui s'effectue transversalement à la voie de transport, s'effectuant dans des plans de stockage qui sont disposés au dessus des voies ( 3al, 3a2 ) de transport, dans le deuxième à nième plan respectivement.

12. Zone de fret suivant l'une des revendications 1 à 11,
**caractérisée en ce que**
les éléments de levage ( 5c ) sont constitués sous la forme de pont roulant.

13. Zone de fret suivant l'une des revendications 1 à 12,
**caractérisée en ce que**
les accumulateurs ( 5 ) verticaux sont disposés en tant que tampons intermédiaires dans la zone ( 1 ou 6 ) de chargement proche de l'aire de trafic et/ou proche de routes et/ou de rails.
